# EUROPEAN PATENT SPECIFICATION

(11) **EP 3 041 226 B1**
(45) Date of publication and mention of the grant of the patent: **21.03.2018**
(21) Application number: 14397539.9
(22) Date of filing: 29.12.2014
(51) Int. Cl.: H04N 7/10, H04N 7/20, H03H 7/46

(54) **A combiner for satellite TV reception**
Kombinator für Satelliten-TV-Empfang
Combineur de réception de télévision satellite

(43) Date of publication of application: 06.07.2016
(73) Proprietor: Teleste Oyj, 20660 Littoinen (FI)
(72) Inventor: Mothersdale, Keith, Rathmell, Settle, North Yorkshire BD240LT (GB); Chang, Chieh-Pin, Taoyuan (TW)
(74) Representative: Berggren Oy, Tampere

(56) References cited:
- EP-A1- 2 536 137
- WO-A1-2010/126472
- WO-A2-2012/118874
- MONK ANTON ET AL: "The Multimedia Over Coax Alliance", PROCEEDINGS OF THE IEEE, IEEE. NEW YORK, US, vol. 101, no. 11, 1 November 2013 (2013-11-01), pages 2322-2338, XP011529859, ISSN: 0018-9219, DOI: 10.1109/JPROC.2013.2266299 [retrieved on 2013-10-16]

## Description

### Field of the invention

The present invention relates to satellite TV reception, and more particularly to enhancing the utilisation of the existing coaxial cable infrastructure for satellite TV reception.

### Background of the invention

Nowadays many households have some sort of in-house coaxial cable infrastructure, thus providing an existing media for an in-house local area network. However, even if the reuse of the low loss, high screening, large bandwidth coax networks may enable to install a reliable data network at low installation cost, the existing coaxial cable infrastructures may be poorly applicable to data network purposes.

For example, satellite TV transmissions are transferred from the satellite dish to TV receiver or set-top-boxes (STB) using a coaxial cable. One satellite dish may supply satellite TV signals to a plurality of STBs, but typically separate coaxial cables are used for each STB. Thus, the existing coaxial cable infrastructure in satellite TV reception is merely used for providing each STB with satellite TV transmissions to be displayed on the TV and/or stored in a memory device.

Consequently, there is a need for enhancing the utilisation of the existing coaxial cable infrastructure for satellite TV reception to other types of data communication.

EP 2536137 discloses splitter circuit means for use with a CATV network comprising a signal input for receiving a CATV signal and a splitter for splitting the CATV signal into split signals. The splitter circuit further comprises a second signal input for receiving a MoCA signal and a second splitter for splitting the MoCA signal into split signals. The split CATV signals are lowpass filtered and the split MoCa signals are highpass filtered in two separate diplex filters and combined into combined signals to be supplied in two separate outputs.

"The Multimedia Over Coax Alliance" (Monk et al.), November 2013, discloses a technical overview of the MoCa home networking technology.

### Summary of the invention

Now an improved arrangement has been developed to alleviate the above-mentioned problems. As an aspect of the invention, there is provided a signal combiner, which is characterized in what will be presented in the independent claim. The dependent claims disclose advantageous embodiments of the invention.

According to a first aspect, there is provided a signal combiner for use in satellite TV reception comprising: a first signal input for receiving a first satellite TV (SATV) signal; a first node point for outputting the first SATV signal to a first coaxial cable and for receiving a first MoCA signal from the first coaxial cable and a second MoCA signal from a second coaxial cable; a first diplex filter between the first signal input and the first node point arranged to lowpass filter the first MoCA signal to be supplied in a first combination point and to highpass filter the first SATV signal to be supplied to the first node point; wherein the first MoCA signal and the second MoCA signal at the first combination point are combined into a combined MoCA signal to be supplied from the first node point to the first coaxial cable and the second coaxial cable; the signal combiner further comprising a first bypass circuit for bypassing the first diplex filter for low noise block (LNB) control signals supplied from the first node point to the first signal input. According to an embodiment, the signal combiner further comprises a second signal input for receiving a second SATV signal; a second node point for outputting the second SATV signal to a second coaxial cable and for receiving the second MoCA signal from the second coaxial cable; a second diplex filter between the second signal input and the second node point arranged to lowpass filter the second MoCA signal to be supplied in a second combination point and to highpass filter the second SATV signal to be supplied to the second node point; wherein the first MoCA signal at the first combination point and the second MoCA signal at the second combination point are combined into a combined MoCA signal to be supplied in the first node point and in the second node point and a second bypass circuit for bypassing the second diplex filter for LNB control signals supplied from the second node point to the second signal input. According to an embodiment, the first and second diplex filters comprise a lowpass filter having a passband of approximately 475 - 625 MHz.

According to an embodiment, the first and second diplex filters comprise a highpass filter having a cut-off frequency of 950 MHz and being designed to be complementary to said lowpass filter.

According to an embodiment, at least one of the combination points is provided with an external connector for connecting a MoCA compliant device directly via an external coaxial cable.

According to an embodiment, the signal combiner is connectable to a low noise block (LNB) device of a satellite dish.

According to an embodiment, the signal combiner is connectable to a multi-dish switch of a satellite dish.

According to an embodiment, the signal combiner is integrated with a low noise block (LNB) device of a satellite dish.

These and other aspects of the invention and the embodiments related thereto will become apparent in view of the detailed disclosure of the embodiments further below.

### List of drawings

In the following, various embodiments of the invention will be described in more detail with reference to the appended drawings, in which
- Fig. 1: an example of a state-of-art configuration for receiving satellite TV transmissions;
- Fig. 2: shows a combiner according to an embodiment of the invention;
- Fig. 3: shows an example of expanding the existing satellite coaxial infrastructure into a communication network utilising the combiner according to an embodiment of the invention; and
- Fig. 4: shows another example of expanding the existing satellite coaxial infrastructure into a communication network utilising the combiner according to an embodiment of the invention.

### Description of embodiments

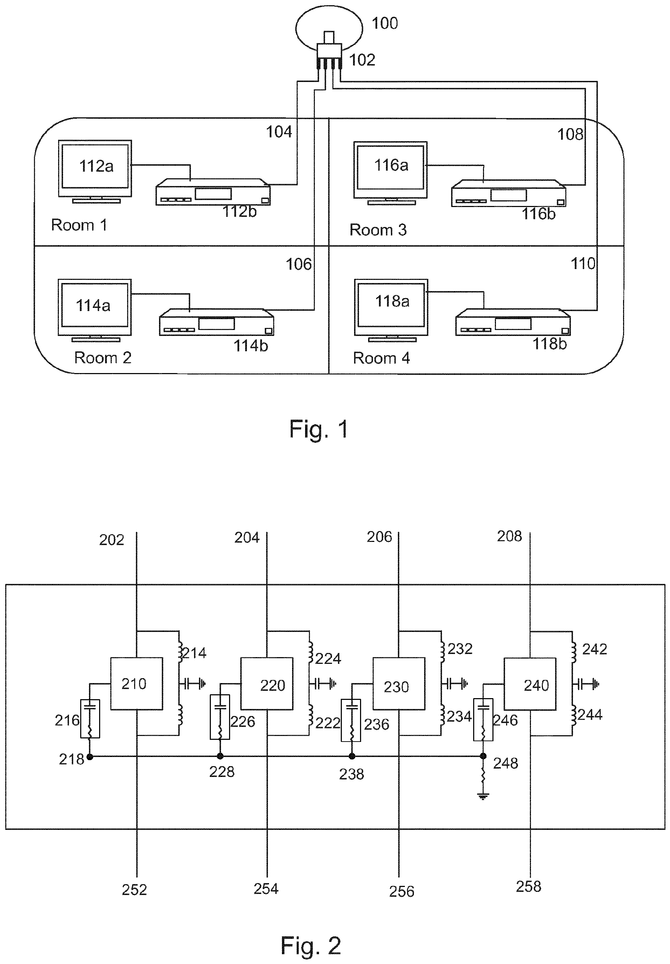

Figure 1 shows an example of a state-of-art configuration for receiving satellite TV transmissions at home. A satellite dish 100 receives satellite TV signals, which are converted by a low-noise block downconverter (LNB) 102 into a form that signals can be transferred to the set-top-boxes (STB) via a coaxial cable. In Figure 1, the LNB has four outputs and a coaxial cable 104, 106, 108, 110 is connected to each output. Four television sets 112a, 114a, 116a, 118a with a STB 112b, 114b, 116b, 118b connected to each are provided in different rooms. The existing coaxial cable infrastructure now comprises the four coaxial cables connecting each of the STBs to an output of the LNB.

It is noted that in a typical configuration there are two outputs from the LNB to each STB, thereby enabling a customer to watch a first channel from a first multiplex of satellite TV transmission and to record a second channel from a second multiplex of satellite TV transmission at the same time.

The LNB is mounted on the satellite dish for satellite TV reception. The LNB receives the microwave signal from the satellite collected by the satellite dish, amplifies the signal and downconverts the block of frequencies to a lower block of intermediate frequencies (IF) such that the signal may be transferred to the indoor satellite TV receiver using coaxial cable. The power for the LNB is supplied from the receiver or set-top box inside the house. Herein, the same coaxial cable that carries the received signals to the receiver may be used as the power cable.

Satellite TV signals are typically polarized so as to enable transmitting more TV channels using a given block of frequencies. As a result, two satellite TV signals can be transmitted on at least closely adjacent frequencies with different polarization, but the receiving equipment is capable of separating the signals. Most satellite TV transmissions use vertical and horizontal linear polarization. For separating the signals from each other and for selecting the desired signal, the satellite receiver sends horizontal and vertical LNB switching voltage signals to the LNB for controlling its operation.

It is also possible to use a large satellite dish for receiving satellite TV signals from two or more satellites. The desired satellite is selected by controlling a multi-dish switch to adjust the LNB appropriately. Satellite TV signals from two or more satellites may also be received using a smaller, but movable satellite dish comprising e.g. an antenna rotor. In either case, it is typically required that the satellite receiver sends control signals either to the multi-dish switch or to the antenna rotor. The control signals are usually so-called DiSEqC (Digital Satellite Equipment Control) communication protocol signals.

In the configuration of Figure 1, the existing coaxial cable infrastructure is used for providing each STB with satellite TV transmissions to be displayed on the TV and/or stored in a memory device.

In order to further enhance the utilisation of the existing coaxial cable infrastructure for satellite TV reception, a device is now introduced which combines a satellite TV signal with a bi-directional data signal to be transmitted in the same coaxial cable infrastructure.

For utilizing the existing coaxial cabling for in-home networking, various technologies have been developed. One of these technologies is called Multimedia over Coax Alliance (MoCA). A MoCA network is established by connecting MoCA-enabled or MoCA interface devices at the cable outlets in the rooms of the subscriber premises. These MoCA interface devices implement a MoCA communication protocol which encapsulates the signals normally used by the multimedia devices within MoCA signal packets and then communicates the MoCA signal packets between other MoCA interface devices connected at other cable outlets at various frequency bands A - H between 500 - 1675 MHz. For example, in the frequency band E the MoCA signals are transmitted between 475 - 625 MHz. For further details about the implementation of MoCA, a reference is made to MoCA standard specifications MoCA 1.1 and MoCA 2.0.

Figure 2 shows an embodiment of a combiner 200 according to the invention. The combiner 200 comprises a first signal input 202 for receiving a first satellite TV (SATV) signal; a first node point 252 for outputting the first SATV signal to a first coaxial cable and for receiving a first MoCA signal from the first coaxial cable; a first diplex filter 210 between the first signal input 202 and the first node point 252 arranged to lowpass filter the first MoCA signal to be supplied in a first combination point 218 and to highpass filter the first SATV signal to be supplied to the first node point 252; a second signal input 204 for receiving a second SATV signal; a second node point 254 for outputting the second SATV signal to a second coaxial cable and for receiving a second MoCA signal from the second coaxial cable; a second diplex filter 220 between the second signal input 204 and the second node point 254 arranged to lowpass filter the second MoCA signal to be supplied in a second combination point 228 and to highpass filter the second SATV signal to be supplied to the second node point 254; wherein the first MoCA signal at the first combination point 218 and the second MoCA signal at the second combination point 228 are combined into a combined MoCA signal to be supplied in the first node point 252 and in the second node point 254.

As shown in Figure 2, the example shows further, i.e. a third and fourth, diplex filter circuits with similar configurations as the first and second diplex filter circuits described above. However, the simplest embodiment may comprise only one diplex filter circuit. The number of diplex filter circuits may be adjusted according to the LNB configuration in use.

Thus, the combiner may comprise only one or a plurality of inputs 202, 204, 206, 208 from the LNB on the satellite dish. Each of the inputs is connected to a diplex filter 210, 220, 230, 240. In practice, the number of actively operated diplex filters may correspond to the number of outputs from the LNBs on the satellite dish.

Each diplex filter and the circuitry connected to it operate similarly. Let us consider the first diplex filter 210 connected to the input 202. The diplex filter 210 is provided with an output 252, to which a satellite TV receiver is connected. The satellite TV receiver may be, for example, a satellite set-top-box (STB) or a television with an integral STB. The diplex filter 210 is provided with a by-pass circuitry comprising inductors 212, 214 that bypasses the horizontal and vertical LNB switching voltages, which are sent by the STB. The inductor circuit will also pass a 22 KHz DiSEqC switching signal to the LNB if this is supplied by the STB.

The LNB supplies the satellite TV signal in the frequency range 950 - 2150 MHz to the input 202. The satellite TV signal is further supplied in the first diplex filter 210, more particularly in a first highpass filter HPF1 therein, which has a cut-off frequency of 950 MHz. According to an embodiment, the diplex filter may be implemented as a lumped element multi-section construction with coils and capacitors providing a high Q factor to minimise the in-out RF signal insertion loss.

Now for enabling the MoCA RF signal to be transmitted between the satellite receivers and any other MoCA compliant devices connected to the coaxial home network, the first diplex filter 210 is provided with first lowpass filter LPF1. The lowpass filter LPF1 may have cut-off frequency at well below 950 MHz, at least implementing a passband of approximately 475 - 625 MHz, i.e. the frequency range of the MoCA RF signal, thereby being arranged to block any 950 - 2150 MHz satellite TV signal possibly appearing in the input of the LPF1. The diplex filter 210 also provides high level signal isolation ensuring signals transmitted in the 475 - 625 MHz range do not interfere with the LNB signals at the input 202.

A MoCA RF signal transmitted by the satellite receiver connected to the output 252 will pass the lowpass filter LPF1 of the diplex filter 210 and the RC circuit 216 to the signal combining point 218. The signal combining points 218, 228, 238, 248 of each diplex filter circuit are connected to each other. Thus, each MoCA RF signal transmitted by the satellite receivers and any other MoCA compliant devices connected to the coaxial home network will be combined at the signal combining points 218, 228, 238, 248. The combined signal will pass to the outputs 252, 254, 256, 258, meaning that each MoCA device can communicate full duplex with any other.

As mentioned above, the simplest embodiment of the MoCA combiner comprises only one diplex filter circuit. Thus, only one satellite receiver may be connected to an output 252 of the MoCA combiner via first coaxial cable. A first MoCA RF signal transmitted by the satellite receiver or a MoCA compliant device connected to the output 252 via the first coaxial cable will pass the lowpass filter LPF1 of the diplex filter 210 and the RC circuit 216 to the signal combining point 218. Any other MoCA compliant device (without a satellite receiver) may be connected to the signal combining point 218 via a second coaxial cable. Each MoCA RF signal transmitted via the first and second coaxial cables will be combined at the signal combining points 218, and the combined signal is then transmitted to the first and second coaxial cables, again enabling the MoCA devices to communicate full duplex with each other.

The MoCA compliant devices used in the coaxial home network typically have a simple implementation of loop-thru RF bypass circuit for bypassing the satellite signals to the STB, while the MoCA RF signals are transmitted to the combiner. Thus, the satellite signal is received uninterruptedly despite of the full duplex communication between the MoCA devices.

The MoCa combiner with a satellite bypass as shown in Figure 2 is a completely passive device, thus being reliable to operate and inexpensive to manufacture. The diplex filter circuits in Figure 2 provide basic building blocks for further embodiments of invention. As mentioned above, each diplex filter and the circuitry connected to it operate similarly. Thus, the combiner may be implemented as having various number of input 202, 204, 206, 208 simply by adjusting the number of the diplex filter circuits. The MoCa combiner with a satellite bypass as shown in Figure 2 ensures a sufficiently high MoCA data rate complying with the MoCA Specification, v2.0.

According to an embodiment, one or more of the signal combining points 218, 228, 238, 248 of each diplex filter circuit are provided with an external connector for directly connecting a MoCA compliant device via a coaxial cable external to the in-home satellite installation. Thus, said one or more of the signal combining points 218, 228, 238, 248 may be combined, for example, to a MoCA switch via an external coaxial cable, thereby providing a signal path for transferring a MoCa signal between any of said one or more of the signal combining points 218, 228, 238, 248 and, for example, a MoCA compliant device not connected to the coaxial cables of the in-home satellite installation. On the other hand, if at least two of said signal combining points 218, 228, 238, 248 are combined to the MoCA switch, the MoCA signal at said combining points may be transferred via the MoCA switch, thereby making the direct connection between at least said two of the signal combining points 218, 228, 238, 248 optional. Such a point-to-point connection may provide better throughput performance for the MoCA signals than using only the coaxial cables of the in-home satellite installation. It is noted that also in this embodiment the coaxial cables of the in-home satellite installation are still needed for transferring MoCA signals from the satellite receivers and any other MoCA compliant devices connected to the in-home satellite coaxial cables.

According to an embodiment, the MoCA combiner is implemented as a stand-alone device, which is connectable to the outputs of the LNB. The MoCA combiner may be connected to the outlets of the LNB by cables and secured to the housing of the LNB.

If a multi-dish switch is used for adjusting the LNB, the multi-dish switch may be a separate device connected to the LNB. The LNB forwards the IF signals to the multi-dish switch, which is controlled e.g. by DiSEqC signals to select an appropriate LNB input on the multi-dish switch. Thus, according to an embodiment, the MoCA combiner is implemented as a stand-alone device, which is connectable to the outputs of the multi-dish switch.

According to another embodiment, the MoCA combiner is implemented as integrated with the LNB. Thus, the MoCA combiner may be integrated within existing LNB housing designs and form part of the complete LNB device.

The MoCa combiner with a satellite bypass as shown in Figure 2 allows a standard in-home satellite installation to become an IP Ethernet in-home network utilising the existing coaxial cable infrastructure.

The MoCa combiner allows full IP Ethernet services for broadband data, IP video or VoIP to be transmitted over the existing in-home satellite coaxial infrastructure using MoCa technology.

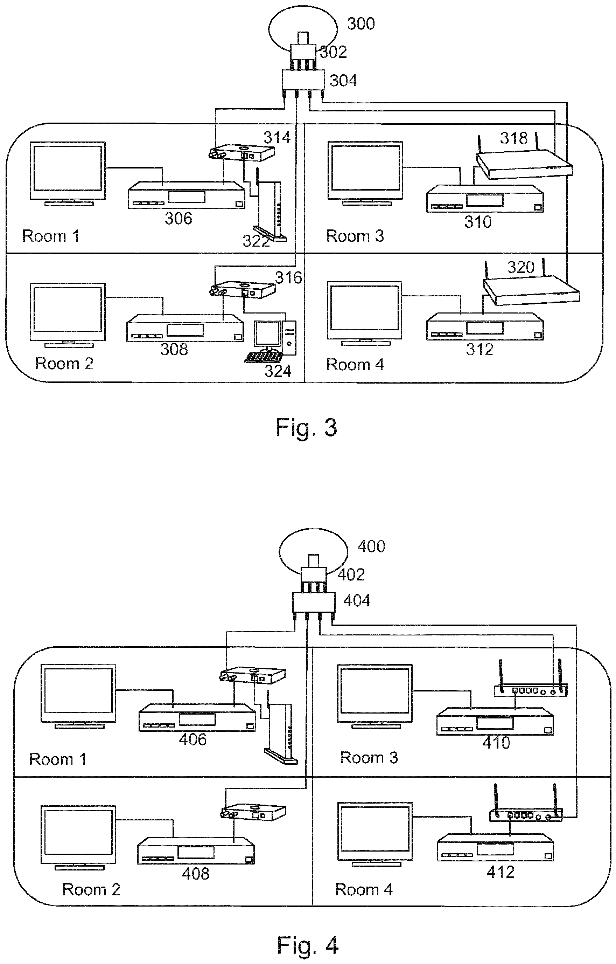

Figure 3 shows an example of expanding the existing satellite coaxial infrastructure, for example as shown in Figure 1, into a high speed MoCA communication network between a plurality of rooms 1, 2, 3, 4. The set-top-boxes 306, 308, 310, 312 are now connected to MoCA compliant devices 314, 316, 318, 320 having a loop-thru RF bypass circuit for bypassing the satellite signals from the satellite dish 300, thus receiving the satellite signal uninterruptedly. The MoCA compliant devices may have further communication devices 322, 324, such as computers, servers, laptops, smart phones, modems, gateway devices, etc., connected thereto. Now, thanks to the MoCA combiner 306 connected to the LNB 304, the MoCA compliant devices and the communication devices connected thereto may communicate with each other at high broadband data transfer speeds. Figure 4 shows another example of utilising the existing satellite coaxial infrastructure as a high speed MoCA communication network between a plurality of rooms 1, 2, 3, 4. In Figure 4, the set-top-box 406 in room 1 is configured as a master STB, whereas the set-top-boxes 408, 410, 412 in other rooms are configured as slave STBs. Now the data stream provided at the master STB 406, either a real-time data stream or retrieved from a memory device, can be provided to the slave STBs 408, 410, 412 using the MoCA IP connection between the devices. For example, a movie stored in the master STB may be shown via the slave STBs.

## Claims

1. A signal combiner for use in satellite TV reception comprising:
a first signal input for receiving a first satellite TV, SATV, signal;
a first node point for outputting the first SATV signal to a first coaxial cable and for receiving a first MoCA signal from the first coaxial cable and a second MoCA signal from a second coaxial cable;
a first diplex filter between the first signal input and the first node point arranged to lowpass filter the first MoCA signal to be supplied in a first combination point and to highpass filter the first SATV signal to be supplied to the first node point;
wherein the first MoCA signal and the second MoCA signal at the first combination point are combined into a combined MoCA signal to be supplied from the first node point to the first coaxial cable and the second coaxial cable; the signal combiner further comprising
a first bypass circuit for bypassing the first diplex filter for low noise block, LNB, control signals supplied from the first node point to the first signal input.

2. The signal combiner according to claim 1, further comprising
a second signal input for receiving a second SATV signal;
a second node point for outputting the second SATV signal to a second coaxial cable and for receiving the second MoCA signal from the second coaxial cable;
a second diplex filter between the second signal input and the second node point arranged to lowpass filter the second MoCA signal to be supplied in a second combination point and to highpass filter the second SATV signal to be supplied to the second node point;
wherein the first MoCA signal at the first combination point and the second MoCA signal at the second combination point are combined into a combined MoCA signal to be supplied in the first node point and in the second node point; the signal combiner further comprising
a second bypass circuit for bypassing the second diplex filter for LNB control signals supplied from the second node point to the second signal input.

3. The signal combiner according to claim 2, wherein the first and second diplex filters comprise a lowpass filter having a passband of approximately 475 - 625 MHz.

4. The signal combiner according to claim 3, wherein the first and second diplex filters comprise a highpass filter having a cut-off frequency of 950 MHz and being designed to be complementary to said lowpass filter.

5. The signal combiner according to any preceding claim, wherein at least one of the combination points is provided with an external connector for connecting a MoCA compliant device directly via an external coaxial cable.

6. The signal combiner according to any preceding claim, wherein the signal combiner is connectable to a low noise block, LNB, device of a satellite dish.

7. The signal combiner according to any of claims 1 - 5, wherein the signal combiner is connectable to a multi-dish switch of a satellite dish.

8. A signal combiner according to any of claims 1 - 5, wherein the signal combiner is integrated with a low noise block, LNB, device of a satellite dish.

## Patentansprüche

1. Ein Signal-Kombinator zur Verwendung im Satelliten-TV-Empfang, der Folgendes aufweist:
einen ersten Signaleingang zum Empfangen eines ersten Satelliten-TV-Signals, ein SATV-Signal;
einen ersten Knotenpunkt zum Ausgeben des ersten SATV-Signals an ein erstes Koaxialkabel und zum Empfangen eines ersten MoCA-Signals von dem ersten Koaxialkabel und eines zweiten MoCA-Signals von einem zweiten Koaxialkabel;
- ein erstes Diplexfilter zwischen dem ersten Signaleingang und dem ersten Knotenpunkt, das angeordnet ist, das erste MoCA-Signal, das einem ersten Kombinationspunkt zugeführt werden soll, einer Tiefpassfilterung zu unterziehen, und das erste SATV-Signal, das dem ersten Knotenpunkt zugeführt werden soll, einer Hochpassfilterung zu unterziehen;
wobei das erste MoCA-Signal und das zweite MoCA-Signal am ersten Kombinationspunkt zu einem kombinierten MoCA-Signal kombiniert werden, um von dem ersten Knotenpunkt dem ersten Koaxialkabel und dem zweiten Koaxialkabel zugeführt zu werden; wobei der Signal-Kombinator darüber hinaus Folgendes aufweist:
eine erste Umgehungsschaltung zum Umgehen des ersten Diplexfilters für rauscharme Block-, LNB-Steuersignale, die von dem ersten Knotenpunkt dem ersten Signaleingang zugeführt werden.

2. Signal-Kombinator gemäß Anspruch 1, der darüber hinaus Folgendes aufweist:
einen zweiten Signaleingang zum Empfangen eines zweiten SATV-Signals;
einen zweiten Knotenpunkt zum Ausgeben des zweiten SATV-Signals an ein zweites Koaxialkabel und zum Empfangen des zweiten MoCA-Signals von dem zweiten Koaxialkabel;
ein zweites Diplexfilter zwischen dem zweiten Signaleingang und dem zweiten Knotenpunkt, das angeordnet ist, das zweite MoCA-Signal, das einem zweiten Kombinationspunkt zugeführt werden soll, einer Tiefpassfilterung zu unterziehen, und das zweite SATV-Signal, das dem zweiten Knotenpunkt zugeführt werden soll, einer Hochpassfilterung zu unterziehen;
wobei das erste MoCA-Signal an dem ersten Kombinationspunkt und das zweite MoCA-Signal an dem zweiten Kombinationspunkt zu einem kombinierten MoCA-Signal kombiniert werden, das dem ersten Knotenpunkt und dem zweiten Knotenpunkt zugeführt werden soll; wobei der Signal-Kombinator darüber hinaus Folgendes aufweist:
eine zweite Umgehungsschaltung zum Umgehen des zweiten Diplexfilters für LNB-Steuersignale, die von dem zweiten Knotenpunkt dem zweiten Signaleingang geführt werden.

3. Signal-Kombinator gemäß Anspruch 2, wobei das erste und zweite Diplexfilter ein Tiefpassfilter mit einem Durchlassbereich von ca. 475 - 625 MHz aufweisen.

4. Signal-Kombinator gemäß Anspruch 3, wobei das erste und zweite Diplexfilter ein Hochpassfilter aufweisen, das eine Grenzfrequenz von 950 MHz aufweist und so konzipiert ist, dass es zu dem Tiefpassfilter komplementär ist.

5. Signal-Kombinator gemäß einem der vorhergehenden Ansprüche, wobei mindestens einer der Kombinationspunkte mit einem externen Verbindungsstück zum Verbinden eines MoCA-kompatiblen Geräts direkt via ein externes Koaxialkabel vorgesehen ist.

6. Signal-Kombinator gemäß einem der vorhergehenden Ansprüche, wobei der Signal-Kombinator mit einem rauscharmen Block-, LNB-Gerät einer Satellitenschüssel verbindbar ist.

7. Signal-Kombinator gemäß einem der Ansprüche 1 - 5, wobei der Signal-Kombinator mit einem Mehrfachschüssel-Schalter einer Satellitenschüssel verbindbar ist.

8. Signal-Kombinator gemäß einem der vorhergehenden Ansprüche 1 - 5, wobei der Signal-Kombinator mit einem rauscharmen Block-, LNB-Gerät einer Satellitenschüssel integriert ist.

## Revendications

1. Combineur de signal destiné à une utilisation dans la réception de la télévision par satellite, comprenant :
une première entrée de signal permettant de recevoir un premier signal de télévision par satellite, SATV ;
un premier point nodal permettant de produire le premier signal SATV vers un premier câble coaxial et permettant de recevoir un premier signal MoCA en provenance du premier câble coaxial et un deuxième signal MoCA en provenance d'un deuxième câble coaxial ;
un premier filtre diplex entre la première entrée de signal et le premier point nodal agencé pour filtrer passe-bas le premier signal MoCA à fournir en un premier point de combinaison et pour filtrer passe-haut le premier signal SATV à fournir au premier point nodal ;
dans lequel le premier signal MoCA et le deuxième signal MoCA au niveau du premier point de combinaison sont combinés en un signal MoCa combiné à fournir du premier point nodal vers le premier câble coaxial et le deuxième câble coaxial ; le combineur de signal comprenant en outre
un premier circuit de dérivation permettant de dériver le premier filtre diplex pour des signaux de commande de tête universelle, LNB, fournis du premier point nodal vers la première entrée de signal.

2. Combineur de signal selon la revendication 1, comprenant en outre
une deuxième entrée de signal permettant de recevoir un deuxième signal SATV ;
un deuxième point nodal permettant de produire le deuxième signal SATV vers un deuxième câble coaxial et permettant de recevoir le deuxième signal MoCA en provenance du deuxième câble coaxial ;
un deuxième filtre diplex situé entre la deuxième entrée de signal et le deuxième point nodal agencé pour filtrer passe-bas le deuxième signal MoCA à fournir en un deuxième point de combinaison et pour filtrer passe-haut le deuxième signal SATV à fournir au deuxième point nodal ;
dans lequel le premier signal MoCA au niveau du premier point de combinaison et le deuxième signal MoCA au niveau du deuxième point de combinaison sont combinés en un signal MoCA combiné à fournir dans le premier point nodal et dans le deuxième point nodal ; le combineur de signal comprenant en outre
un deuxième circuit de dérivation permettant de dériver le deuxième filtre diplex pour des signaux de commande LNB fournis du deuxième point nodal vers la deuxième entrée de signal.

3. Combineur de signal selon la revendication 2, dans lequel les premier et deuxième filtres diplex comprennent un filtre passe-bas présentant une bande passante comprise entre approximativement 475 et 625 MHz.

4. Combineur de signal selon la revendication 3, dans lequel les premier et deuxième filtres diplex comprennent un filtre passe-haut présentant une fréquence de coupure de 950 MHz et conçus pour être complémentaire dudit filtre passe-bas.

5. Combineur de signal selon l'une quelconque des revendications précédentes, dans lequel au moins un des points de combinaison est muni d'un raccord externe permettant de raccorder un dispositif compatible MoCA directement via un câble coaxial externe.

6. Combineur de signal selon l'une quelconque des revendications précédentes, dans lequel le combineur de signal peut être raccordé à un dispositif formant tête universelle, LNB, d'une antenne satellite parabolique.

7. Combineur de signal selon l'une quelconque des revendications 1 à 5, dans lequel le combineur de signal peut être raccordé à un commutateur multi-antenne d'une antenne satellite parabolique.

8. Combineur de signal selon l'une quelconque des revendications 1 à 5, dans lequel le combineur de signal est intégré à un dispositif formant tête universelle, LNB, d'une antenne satellite parabolique.
